# EUROPEAN PATENT SPECIFICATION

(11) **EP 3 081 606 B1**
(45) Date of publication and mention of the grant of the patent: **12.09.2018**
(21) Application number: 15834784.9
(22) Date of filing: 28.05.2015
(51) Int. Cl.: C09D 11/52, B41F 15/00, B41M 1/30, B41M 1/34, C09D 11/03, C09D 11/10, B41M 1/12, B41M 1/26

(54) **INK COMPOSITION FOR HIGH-QUALITY AND HIGH-RESOLUTION SCREEN PRINTING, PRINTED ARTICLE OBTAINED BY SCREEN PRINTING WITH SAME, AND METHOD FOR PRODUCING SAID PRINTED ARTICLE**
TINTENZUSAMMENSETZUNG FÜR HOCHWERTIGES UND HOCHAUFLÖSENDES SIEBDRUCKEN, DURCH SIEBDRUCKEN DAMIT HERGESTELLTER GEDRUCKTER ARTIKEL UND VERFAHREN ZUR HERSTELLUNG DES GEDRUCKTEN ARTIKELS
COMPOSITION D'ENCRE POUR SÉRIGRAPHIE DE HAUTE QUALITÉ ET HAUTE RÉSOLUTION, ARTICLE IMPRIMÉ OBTENU PAR SÉRIGRAPHIE DE LADITE COMPOSITION D'ENCRE, ET PROCÉDÉ DE PRODUCTION DUDIT ARTICLE IMPRIMÉ

(30) Priority: 27.01.2015 JP 2015013207
(43) Date of publication of application: 19.10.2016
(73) Proprietor: Teikoku Printing Inks Mfg. Co., Ltd, Minato-ku Tokyo 1080073 (JP)
(72) Inventor: OGATA, Tomomi, Tokyo (JP); TORIHATA, Takuya, Tokyo (JP); TAKADA, Naoto, Tokyo (JP)
(74) Representative: von Füner, Nicolai
(86) International application number: PCT/JP2015/065426
(87) International publication number: WO 2016/121141

(56) References cited:
- JP-A- 2009 030 065
- JP-A- 2010 047 649
- JP-A- 2010 047 716
- JP-A- 2012 017 411

## Description

### [Technical Field]

The present invention relates to an ink composition for high-quality/high-definition screen printing that allows high-precision printing of both fine patterns such as fine dot patterns or fine line patterns, and wide-area solid patterns, simultaneously in a single step by screen printing, which is a method widely used for image pattern formation in the field of graphics and electric and electronic part-related fields, as well as to printed matter produced by the screen printing ink composition and to a method for producing the printed matter.

### [Background Art]

In recent years, for graphic decorative printed matter such as vehicle meter and household electrical appliance labels and designs on tablet device frames and enclosures, demands are increasing for more convenient and low-cost production of printed matter with greater diversity of design and increasingly high definition, having both fine patterns (for example, dot patterns with diameters of about 100 µm, or fine line patterns), and wide-area solid patterns. There is also a demand for higher quality and higher definition of the visibility of printed images that comprise both fine patterns and solid patterns, by improving the sharpness of the image edge sections in solid patterns while also obtaining a satisfactory leveling property. Moreover, in the fields of conductive circuit printing or black matrix printing, for electric and electronic parts, there is a demand for obtaining a high degree of definition that provides sharpness to the printed images without bleeding or spreading, in addition to stable printing of fine lines, and there is a desire to be able to accomplish high definition printing with satisfactory visibility in a single step regardless of the size of the printed area, for cost reduction.

In conventional screen printing, when printing a dot pattern or fine line pattern of approximately 100 µm, printing is usually performed using a high-viscosity screen printing ink of about 10 to 200 Pa·s, with a reduced flow property, but printing of solid patterns with such high-viscosity screen printing inks cannot avoid creation of leveling defects or printing abnormalities in the solid patterns due to the poor flow property, and as a result the visibility of the printed matter is impaired. Furthermore, when a low-viscosity screen printing ink of several Pa·s is used for satisfactory printing of solid patterns, it has been impossible to avoid spreading of ink that may exceed about 50 to 100 µm at the solid pattern image edge sections, or enlargement, spreading or bleeding of fine patterns, that impair the visibility of the printed matter, and therefore screen printing of fine patterns and solid patterns is performed separately with different inks suitably prepared for each, and it has been difficult to produce printed matter comprising both fine patterns and solid patterns in a single step of screen printing.

Ink jet printing, on the other hand, is considered to allow high-precision printing of printed matter comprising both fine patterns and solid patterns in a single step, and many attempts have been made to accomplish high-quality, high-definition printing by ink jet printing, however, since ink jet printing involves spraying ink droplets from a head nozzle with a diameter of about 30 µm, which spread out to about 50 µm at minimum when the droplets impact with the object being printed, it has been the case that such printing lacks sharp linearity especially at image edge sections.

Offset printing is another printing system that allows creation of high-quality, high-definitionprintedmatter, however, since the structure of the printing plate is mesh-like, resulting in the printed images that are aggregated prints of halftone dots, it has been impossible to avoid a lack of sharp linearity at image edge sections, similar to ink jet printing, while the printing film thickness is also thin at about 1 to 2 µm, and when compared to screen printed matter, it is inferior in terms of high film thickness, high durability, high weather resistance and high chemical resistance, as well as firm adhesion to various objects to be printed and versatile functionality, such that it is unsuitable for creation of printed matter that requires durability and functionality, such as vehicle meter and household electrical appliance labels, designs on tablet device frames and enclosures, circuit printing for electric and electronic parts, and light modulated black matrices.

Prior Patent Document 1 (Japanese Unexamined Patent Application Publication No. 2010-047716) discloses a conductive ink composition and conductive coating film for screen printing that can form high-definition patterns, but techniques relating to the flow property of ink for printing with both fine patterns and solid patterns have not been pursued, and therefore while fine patterns can be obtained with satisfactory printing precision, in the case of solid patterns the leveling property is poor and printing abnormalities are generated. Furthermore, the technical scope of Prior Patent Document 1 relates only to printing of fine patterns with the conductive ink composition.

In addition, Prior Patent Document 2 (Japanese Unexamined Patent Application Publication No. 2003-238876) and Prior Patent Document 3 (Japanese Unexamined Patent Application Publication No. 2003-294930) disclose ink compositions for screen printing that allow formation of high-definition patterns, but as with Prior Patent Document 1, the disclosures are of techniques for highly precise printing of fine patterns but not of technology relating to ink compositions for simultaneous printing of solid patterns in a single step.
JP 2012 017411 A (prior art document 4) discloses a resin composition for screen printing to be used as a protective film for a printed circuit board, wherein the thixotropic index (viscosity value A/viscosity value B), viscosity value A is 1.2 to 2.5 and viscosity value B is in the range of 30 Pa·s to 75 Pa·s, and the viscosity value B at a shear rate of 6/sec is the viscosity recovery time from the point where the shear rate has been changed to 0.6/sec until 85% of viscosity value A is reached, becoming constant at being 120 sec or less.
JP 2010 047649 A (prior art document 5) discloses a conductive ink containing a foil-like silver powder (A), a resin varnish (B), a thixotropy-imparting agent (C) and a solvent (D), wherein the proportion of silver powder of the total solid content is in the range of 50 wt% to 65 wt%, and the value of the difference between the ink spread after 10 seconds (SR₁₀) and the spread after 90 seconds (SR₉₀) as measured with a spread meter is no greater than 2.5 mm

### [Citation List]

### [Patent Document]

[Prior Patent Document 1] Japanese Unexamined Patent Application Publication No. 2010-047716
[Prior Patent Document 2] Japanese Unexamined Patent Application Publication No. 2003-238876
[Prior Patent Document 3] Japanese Unexamined Patent Application Publication No. 2003-294930
[Prior Patent Document 4] JP 2012 017411 A
[Prior Patent Document 5] JP 2010 047649 A

### [SUMMARY OF THE INVENTION]

### [Problems to be Solved by the Invention]

The present invention has been accomplished in light of the problems described above, and it relates to an ink composition for high-quality/high-definition screen printing as set forth in independent claim 1, i.e. that allows printing of both fine patterns such as fine dot patterns or fine line patterns, and wide-area solid patterns, simultaneously in a single step by screen printing, which has been considered impossible to achieve by conventional screen printing, as well as to printed matter produced by screen printing using the ink composition as set forth in independent claim 6 and to a method for producing the printed matter as set forth in independent claim 7.

### [Means for Solving the Problems]

The invention relates to an ink composition for screen printing, which is an ink composition for high-quality/high-definition screen printing that, when producing printed matter by screen printing onto an object to be printed using a 360-mesh screen printing plate formed by a high-strength, non-deforming stainless steel mesh with a filament diameter of 25 µm, produces printed matter with a printed image edge spreading width of no more than 10 µm from the image design dimensions of the printing plate, the ink composition for screen printing containing a solvent with a boiling point of 170°C or higher at 70 wt% or greater of the total solvent, and a prepolymer or polymer with a weight-average molecular weight of 2000 or greater at 2 wt% or greater with respect to the total ink composition,
and having a viscosity of 30 to 180 Pa·s as measured with a BH-type rotating viscosimeter at 25°C, and a thixotropic index of 2.0 to 8.0.

### [Effect of the Invention]

With the ink composition for screen printing of the invention, it has become possible to print fine patterns and large-area solid patterns with high-quality and high-definition by screen printing, with a single screen printing step.

### [Best Mode for Carrying Out the Invention]

As is mentioned above, the invention relates to an ink composition for screen printing, which is an ink composition for high-quality/high-definition screen printing that, when producing printed matter by screen printing on an object to be printed using a 360-mesh screen printing plate formed by a high-strength, non-deforming stainless steel mesh with a filament diameter of 25 µm, produces printed matter with a printed image edge spreading width of no more than 10 µm from the image design dimensions of the printing plate, the ink composition for screen printing containing a solvent with a boiling point of 170°C or higher at 70 wt% or greater of the total solvent, and a prepolymer or polymer with a weight-average molecular weight of 2000 or greater at 2 wt% or greater with respect to the total ink composition, and having a viscosity of 30 to 180 Pa·s as measured with a BH-type rotating viscosimeter at 25°C, and a thixotropic index of 2.0 to 8.0.

The invention further relates to an ink composition for screen printing, wherein the ink composition has a measured flow radius value of 14. 0 to 19.0 mm after 1 minute from the start of measurement by a flow property measuring method using a spread meter at 25° C according to JIS K5701-1:2000.

It further relates to an ink composition for screen printing, wherein the ink composition satisfies "F60" - "F45" ≦ 1.0 mm, where "F60" is defined as the measured flow radius value after 1 minute and "F45" is defined as the measured flow radius value after 45 seconds from the start of measurement by the flow property measuring method using the spread meter.

The invention still further relates to an ink composition for screen printing, wherein the ink composition contains at least one coloring material, extender pigment and filler, either of one type or multiple types, or a combination thereof, the coloring material, extender pigment and filler are dispersed in the ink composition with a mean particle size of no greater than 35 µm.

The invention still further relates to an ink composition for screen printing that is an ink composition for graphic decorative screen printing.

The invention still further relates to an ink composition for screen printing that is an ink composition for screen printing to be used for black matrix, black stripe, resist pattern, spacer or light guiding panel dot formation.

It still further relates to an ink composition for screen printing, the ink composition including a filler, the filler having conductivity, and the filler being dispersed in the ink composition with a mean particle size of no greater than 10 µm.

The invention still further relates to printed matter produced by the screen printing ink composition for screen printing onto an object to be printed.

The invention still further relates to a method for producing printed matter, wherein printed matter is produced by the screen printing ink composition for screen printing onto an object to be printed.

The ink composition for screen printing of the invention contains a solvent with a boiling point of 170°C or higher, at 70 wt% or greater of the total solvent. If the solvent with a boiling point of 170°C or higher is not present in an amount of at least 70% of the total solvent, rapid ink drying on the screen printing plate will cause clogging due to an ink-dried coating on the screen printing plate, and defects will be produced in the fine pattern or at the solid image edge sections, making it impossible to obtain a high-definition printed matter with high quality.

There are no particular restrictions on solvents other than the solvent with a boiling point of 170°C or higher to be present in the ink composition for screen printing of the invention, but in order to attenuate the evaporation rate of the solvent with a boiling point of 170°C or higher, by azeotropic evaporation, and obtain more satisfactory stability of the screen printing ink composition on the screen plate, it is preferred to use solvents whose boiling points are not below 100°C.

The solvent with a boiling point of 170°C or higher according to the invention may be an organic solvent such as isophorone, a dibasic acid ester (DBE), 3-methoxy-3-methylbutanol, 3-methoxy-3-methylbutyl acetate, ethyleneglycol monobutyl ether acetate, coal tar naphtha with a boiling point of 170°C or higher, diethyleneglycol monoethyl ether (acetate), diethyleneglycol monobutyl ether (acetate) or triethyleneglycol monobutyl ether (acetate), and/or a (meth)acrylate monomer, vinyl ether monomer or amide monomer that hardens under activating energy rays.

Preferred examples of solvents whose boiling point is not below 100°C, according to the invention, include xylene, cyclohexanone, coal tar naphtha with a boiling point of 160 to 170°C, mineral spirits with a boiling point of 150 to 170°C, 1-methoxy-2-propanol, 1-methoxypropyl-2-acetate and diacetone alcohol.

The solvent of the invention needs only contain 70 wt% or greater of a solvent with a boiling point of 170°C or higher among the total solvent, but in order to further stabilize the screen printing properties for fine patterns, the boiling point of the solvent is preferably 190°C or higher.

However, since using mineral oil or vegetable oil with a boiling point exceeding 250°C as the solvent results in a poor drying property of the printed coating film, when a solvent having a boiling point of higher than 250°C is used, it is preferably used at no more than 5 wt% of the total solvent amount.

In addition, the ink composition for screen printing of the invention contains at least a prepolymer or polymer with a weight-average molecular weight of 2000 or greater, as a binder resin, at 2 wt% or greater with respect to the total ink composition.

If the weight-average molecular weight of the prepolymer or polymer is less than 2000, problems such as weak adhesion or durability of the printed coating film onto objects to be printed will result, while if the weight-average molecular weight exceeds 200000, the solubility in solvents will be poor and a greater amount of time and labor will be necessary for production of the ink composition. Therefore, a more preferred weight-average molecular weight range is about 4000 to 100000.

If the content of the prepolymer or polymer with a weight-average molecular weight of 2000 or greater is less than 2 wt% with respect to the total ink composition, this may lead to reduced adhesion and durability of the printed coating film onto objects to be printed, and undesirable results such as leveling defects and pinhole generation in the printed coating film, due to poor dispersion of the coloring agent. If it exceeds 70 wt%, on the other hand, the viscosity may become too high making it difficult to accomplish uniform screen printing, or the mixing ratio of the solvent with a boiling point of 170°C or higher will be lower, tending to result in easier drying of the ink on the screen printing plate and tending to result in clogging of fine patterns. Therefore, a more preferred content is about 5 to 70 wt% of the total ink composition, an even more preferred range being 10 to 70 wt% and the most preferred range being 15 to 60 wt%, as preferred ranges even for use as an ink for graphic decorative screen printing.

The prepolymer or polymer of the invention has a weight-average molecular weight of 2000 or greater, and there are no particular restrictions on the type or mixing ratio as long as the content is 2 wt% or greater with respect to the total ink composition and up to a content that allows dissolution in the solvent in the ink composition, although it is desirable to avoid highly hazardous harmful substances, such as substances that are strongly toxic for humans or organisms or substances that create a high environmental load.

Examples for the prepolymer include urethane acrylates, polyester acrylates and epoxy acrylates that harden by activating energy rays, such polymers including polyester resins, various types of modified polyester resins such as urethane-modified polyester resins, epoxy-modified polyester resins and acryl-modified polyester resins, vinyl chloride-vinyl acetate copolymer resins, butyral resins, polyether-urethane resins, polyester-urethane resins, polycarbonate-urethane resins, epoxy resins, phenol resins, acrylic resins, polyamide resins, polyamideimide resins, polyolefin resins, chlorinated polyolefin resins, chlorinated rubber, melamineresins, urea resins, modified cellulose resins such as ethyl cellulose resin, nitrocellulose resins, cellulose acetate butyrate (CAB) and cellulose acetate propionate (CAP), rosin resins, maleic acid resins, natural resins and alkyd resins, any of which may be used alone or in combination.

The ink composition for screen printing of the invention also has a viscosity of 30 to 180 Pa·s, and more preferably 50 to 120 Pa·s, as measured by a BH-type rotating viscosimeter. If the viscosity is lower than 30 Pa·s, bleeding and spreading may occur in the fine patterns and solid image edge sections making it impossible to obtain a high-quality, high-definition printed image, while if the viscosity is higher than 180 Pa·s, the ink may not be uniform on the screen printing plate, or parting of the ink from the screen printing plate may be poor, producing abnormalities in solid images or creating defects in fine patterns or image edge sections.

Also, the ink composition for screen printing of the invention has a thixotropic index (TI value) of 2.0 to 8.0, the TI value being more preferably 4.0 to 7.0. If the TI value is less than 2.0, the ink flow property will increase, resulting in spreading in printed images with the passage of time after printing even if the viscosity is 180 Pa·s, such that fine patterns or image edge sections may become enlarged. If the TI value exceeds 8.0, the degree of protrusion of the ink from the screen printing plate will be excessive even if the viscosity is 30 Pa·s, such that bleeding may occur in fine patterns and at image edge sections making it impossible to obtain sharp printed images, or the flow property with time may be impaired, resulting in poor leveling especially on solid images.

The "TI value," for the purpose of the invention, is the ratio of the viscosity value with 2 rotations and the viscosity value with 20 rotations of the BH-type rotating viscosimeter at 25°C, or in other words the value: [viscosity with 2 rotations of BH-type rotating viscosimeter/viscosity with 20 rotations of BH-type rotating viscosimeter].

Furthermore, according to the invention, preferably the ink composition has a measured flow radius value (hereinafter referred to as "flow value") of 14.0 to 19.0 mm after 1 minute from the start of measurement by a flow property measuring method using a spread meter at 25°C according to JIS K5701-1:2000. It is more preferably 15.0 to 18.0 mm. If the flow value is less than 14.0 mm, the ink will protrude from the screen printing plate with greater difficulty, requiring modifications such as increased printing pressure of the squeegee during screen printing, while if the flow value is greater than 19.0 mm, the degree of ink protrusion from the screen printing plate will tend to be greater, requiring modifications such as lowering the printing pressure of the squeegee during screen printing.

Moreover, the flow value represents the radius value of ink that has flowed after 1 minute from the start of measurement with a spread meter as is mentioned above (hereinafter defined as "F60"), but more preferably, if the radius value after 45 seconds from the start of measurement with a spread meter is defined as "F45," then the ink composition is within the above-mentioned flow value range and "F60" - "F45" ≦ 1.0 mm, to obtain stable high-quality, high-definition printed images. This is so that the ink will have a suitable flow property during printing, and so that after printing, the flow property will be such as to minimize large spread of spreading with the passage of time.

The ink composition of the invention is an ink composition for high-quality/high-definition screen printing that at least, when printed matter is created by screen printing onto an object to be printed using a 360 mesh screen printing plate made with a high-strength, non-deforming stainless steel mesh having a filament diameter of 25 µm, can produce printed matter with a printed image edge spreading width of no more than 10 µm from the image design dimensions of the printing plate. If the printed image edge spreading width exceeds 10 µm, enlarged sections of the printed image with respect to the printing plate image design will be visibly apparent and the printed image will become visibly blurred, so that it may no longer be considered high-quality, high-definition decorative printing.

As is mentioned above, the ink composition for high-quality/high-definition screen printing can be prepared by containing at least a solvent with a boiling point of 170°C or higher at 70 wt% or greater of the total solvent, containing at least a prepolymer or polymer with a weight-average molecular weight of 2000 or greater at 2 wt% or greater with respect to the total ink composition, and having at least a viscosity of 30 to 180 Pa·s as measured with a BH-type rotating viscosimeter at 25°C and at least a thixotropic index of 2.0 to 8.0.

In addition, if the ink composition for high-quality/high-definition screen printing satisfies the "preferred conditions and/or desirable conditions" mentioned above and/or below, its production will be further facilitated and the high-quality/high-definition quality as printed matter may be improved.

Here, when the term "zero" µm is used for the printed image edge spreading width, it means complete absence of spreading of the printed ink and printing as prescribed by the image design on the printing plate, but since the printing plate exists in a state with a knitted screen mesh, even in cases where no spreading of the ink is present after printing there can be an effect of the presence of the screen mesh, tending to create minute chipping or jaggedness at the printed image edge sections. Therefore, the spreading width for decorative printing images is preferably 2 to 10 µm and more preferably 3 to 8 µm.

Preferred examples for the screen mesh, screen printing plate and screen printing conditions will now be described.

The 360 mesh screen mesh made of a high-strength, non-deforming stainless steel mesh may be HS-D360 by Asada Mesh Co., Ltd. (mesh filament diameter: 25 µmϕ, calendered mesh thickness: 29 µm, open area ratio: 42%, strength index: 2.56 as indicated by Asada Mesh Co., Ltd.)

The printing plate is preferably a stainless steel/stainless steel combination plate, with an emulsion thickness of 7 to 20 µm using an appropriate commercially available photosensitive emulsion, and further flat-processed on the emulsion surface.

The screen printing conditions maybe, as a preferred example, a squeegee with a 60 to 90 degree hardness, a clearance of 3 to 7 mm, pressing with a squeegee printing pressure of 1.5 to 2.0 mm, a squeegee angle of 50 to 80 degrees, a squeegee speed of 80 to 300 mm/sec and pressing with a scraper pressure of 1.0 to 2.0 mm.

Here, it is an essential condition for the ink composition for screen printing of the invention that, at least for printed matter screen printed using a 360 mesh screen printing plate made of a high-strength, non-deforming stainless steel mesh with a filament diameter of 25 µm, it can produce printed matter with a printed image edge spreading width of no more than 10 µm from the image design dimensions of the printing plate, and therefore even when printed using a screen printing plate made of another type of screen mesh, if the ink composition for screen printing conforms to the necessary conditions of the invention, the ink composition for screen printing is within the technical scope of the invention.

Naturally, when using a screen printing plate made of a high-strength, non-deforming stainless steel mesh that exceeds 360 mesh (for example, 500 mesh, 640 mesh or 840 mesh), spreading of the printed image edges will be even further reduced and the printed image edge sections will be sharper.

Furthermore, when the ink composition for screen printing of the invention contains at least one coloring material, extender pigment or filler, either of one type or multiple types, or a combination thereof, the coloring material, extender pigment and filler is preferably dispersed in the ink composition with a mean particle size of no greater than 35 µm. When a coloring material, extender pigment or filler with a mean particle size exceeding 35 µm after dispersion is present, clogging of the mesh spacings of the 360 mesh screen printing plate may occur, potentially creating chipping and pinholes in the printed image.

There are no particular restrictions on the method for dispersing the coloring material, extender pigment and filler in the ink composition for screen printing of the invention, and examples include dispersion using a blade-stirred disperser, bead disperser or triple roll disperser.

The coloring agent, extender pigment and filler are not particularly restricted, and examples of coloring agents include azo pigments, disazo pigments, bisazo pigments, phthalocyanine pigments, anthraquinone-based pigments, isoindoline pigments, dioxazine pigments, quinacridone pigments, perylene-based pigments, carbon black pigments, lake black pigments, perylene black pigments, aniline black pigments, iron oxide pigments, titanium pigments, zinc sulfide pigments and various chromatic color dyes, any one of which or two or more of which may be used, such coloring materials being preferably used in a mixing ratio of no greater than 95 wt% with respect to the ink composition. The amount is preferably no greater than 50 wt%.

Examples of extender pigments include (fine particulate) silica, talc, calcium carbonate, magnesium carbonate, bentonite, sedimentary barium sulfate, zinc oxide and alumina, any one of which or two or more in combination may be used, such extender pigments being preferably used in a mixing ratio of no greater than 30 wt% with respect to the ink composition.

Examples of fillers include resin beads, metallic particles, metal powder, metal oxide powder, graphite, pearl pigment, fluorescent pigments, wax particles and protein powder. Also included are functional materials, such as ultraviolet absorbing materials, antimicrobial materials, heat absorbing materials, refractive index-modifying materials, slidability-imparting materials, slidability-preventing materials, phosphorescencent materials, polarizing materials, anti-reflection materials and diffusible materials. These may be used alone or in combinations of multiple types, and such fillers are preferably used in a mixing ratio of no greater than 95 wt%, more preferably no greater than 50 wt% and even more preferably no greater than 30 wt%, with respect to the ink composition.

When the ink composition is used as an ink for graphic decorative screen printing, it is possible to produce high-definition graphic decorative screen printed matter of high quality, that has not been achievable with conventional screen printing, namely having excellent precision with excellent linearity of image edge sections and free of chipping or spreading in fine dots, and simultaneously exhibiting rich color shade expression and different types of functionality.

Furthermore, an ink composition for screen printing of the invention containing the above-mentioned coloring agents, extender pigments and fillers is not limited to such graphic decorative screen printed matter, and can be used to produce high-definition screen printed matter even when used for printing onto electric and electronic parts, such as black matrix or stripe printing for increasing display visibility, pattern printing for function as a resist, spacer printing to avoid contact between members, or dot printing designed for specific area sizes, to ensure uniformity of luminance in light guiding panels.

Generally speaking, black inks with a high masking property are usually used for black matrix or stripe printing, white inks, black inks, chromatic color inks, transparent inks, dispersive inks and/or the mixed inks are usually used for resist printing or spacer printing, and inks containing fillers with light diffusing functions such as silica or various types of beads, are usually used for light guiding panel dot printing.

A filler in the ink composition of the invention may be a filler with a conductive property. Such conductive fillers include gold powder, silver powder, copper powder, iron powder, indium powder and tungsten powder, and/or their oxides or complexes, as well as graphite, carbon black and the like. In addition, for a printing ink composition containing such a conductive filler, the type and content of the conductive filler may be selected to obtain electrical resistance values in accordance with the purpose of the printed coating film, and for example, volume resistance values range of no greater than 10⁻² Ω/cm, 10⁻² Ω/cm to 10 Ω/cm or 10 Ω/cm to 10⁶ Ω/cm may be selected as appropriate. The conductive fillers may be used alone, or several different types may be used in combination.

The conductive filler is preferably present in a dispersed state with a mean particle size of no greater than 10 µm in the ink composition, in order to ensure a stabilized resistance value for the printed matter. The content is preferably an amount appropriate for the desired performance, in a content range of no greater than 95 wt% in the ink composition, in order to obtain an electrical resistance value suited for the purpose.

In a conductive ink composition for screen printing using a conductive filler, it is preferred to use a polyester resin, acrylic resin, epoxy resin, nitrocellulose resin, ethyl cellulose resin, rosin-modified maleic acid resin, urethane acrylate prepolymer, polyester acrylate prepolymer, epoxy acrylate prepolymer or the like having a weight-average molecular weight of about 3000 to 30000, or a resin or prepolymer comprising a combination thereof, as a binder resin, at about 2 to 40 wt% with respect to the total of the conductive ink composition for screen printing. Furthermore, the solvent used may be the above-mentioned solvent with a boiling point of 170°C or higher in an amount of 70 wt% or greater of the total solvent, while as is mentioned above, the conductive filler is preferably used in an amount of no greater than 95 wt% with respect to the total conductive ink composition for screen printing, depending on the desired conductive performance, and if necessary, additives such as antifoaming agents, leveling agents and dispersing agents may be added.

Moreover, in a coating film formed using the conductive ink composition for screen printing, when a volume resistance value of lower than about 10⁻² Ω/cm is the target it is preferred to use gold powder, silver powder, copper powder, iron powder, indium powder or tungsten powder, and/or their oxides or complexes in the conductive filler, when a volume resistance value of about 10⁻² Ω/cm to 10 Ω/cm is the target it is preferred to use graphite, carbon black or their combination in the conductive filler, and when a volume resistance value of greater than 10 Ω/cm is the target it is preferred to mainly use carbon black in the conductive filler.

The invention also provides printed matter produced by the screen printing ink composition for screen printing onto an object to be printed.

The invention still further provides a method for producing printed matter, wherein printed matter is produced by the screen printing ink composition for screen printing onto an object to be printed.

In the printed matter and method for producing printed matter provided by the invention, the object to be printed that is used may be art paper, coated paper, various types of synthetic paper, wood, painted slabs, glass, metal, polyester (PET), polycarbonate (PC), acryl, polypropylene (PP), polyethylene (PE), vinyl chloride or the like, which may be in the form of various flat base materials, sheet-like base materials or film-like base materials.

### [Examples]

Examples and Comparative Examples of the invention are shown in [Table 1] below. However, the invention is not limited to these examples.

**[Table 1]**

| | Example 1 | Example 2 | Example 3 | Example 4 | Example 5 | Example 6 | Example 7 | Example 8 | Example 9 | Example 10 | Comp. Ex. 1 | Comp. Ex 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| <Ink composition components> | | | | | | | | | | | | | | | | |
| Polyester resin (molecular weight: 6000) | 12.5 | 15.0 | 15.0 | | | 25.0 | | | | 2.0 | 12.5 | | | | | |
| Polyester resin (molecular weight: 28000) | 10.0 | 15.0 | 15.0 | | 5.0 | | | | 20.0 | | 12.5 | | 5.0 | | | |
| Acrylic resin (molecular weight: 100000) | | | 5.0 | | 25.0 | | | 20.0 | | | | 8.0 | 25.0 | | 5.0 | 10.0 |
| Viinyl chloride/vinyl acetate copolymer resin (molecular weight: 47000) | | | 5.0 | | | 25.0 | | | | | | | | | 10.0 | 10.0 |
| Epoxy resin (molecular weight: 60000) | | | | 70.0 | | | | | | | | 8.0 | | | | |
| Urethane acrylate (molecular weight: 2000) | | | | | | | 75.0 | | | | | | | 80.0 | | |
| Isophorone (boiling point: 216°C) | | 25.0 | 45.0 | | 27.0 | 14.0 | | 40.0 | | | | | 20.0 | | 40.0 | 40.0 |
| DBE (boiling point: 203-245°C) | 20.0 | 10.0 | | | | 2.0 | | | 30.0 | 12.0 | 10.0 | 25.0 | | | | 10.0 |
| 3-Methoxy-3-methyl butanol (boiling point: 174°C) | | | | 20.0 | | | | | | | | | | | | 10.0 |
| Coal tar naphtha (boiling point: 180-200°C) | 2.8 | | | | | 2.0 | | | 5.0 | | 5.0 | | 20.0 | | | |
| 1,6-Hexanediol diacrylate (boiling point: ≥200°C) | | | | | | | 7.0 | | | | | | | 3.0 | | |
| Dipentaerythritol hexaacrylate (boiling point: ≥200°C) | | | | | | | 7.0 | 10.0 | | | | | | 8.0 | | |
| 1-Methoxypropyl-2-acetate (boiling point: 146°C) | | | | | 3.0 | | | 5.0 | 5.0 | | | | 5.0 | | | |
| 1-Methoxy-2-propanol (boiling point: 120°C) | 9.7 | | | 3.0 | | | | | | | | 17.0 | | | | |
| Cyclohexanone (boiling point: 156°C) | | | | | 7.0 | 4.0 | | | | | 15.0 | | 7.0 | | | 9.0 |
| Diacetone alcohol (boiling point: 168°C) | | | | 2.0 | | | | | 5.0 | | | | | | | |
| Carbon black pigment | 10.0 | 5.0 | | | 150 | 5.0 | | | | | 10.0 | 10.6 | 5.0 | | 5.0 | |
| Phthalocyanine green pigment | | 5.0 | 15.0 | | 8.0 | 5.0 | | | | | | 10.0 | 5.0 | | 5.0 | 5.0 |
| Conductive carbon black pigment | | | | | | | | | 10.0 | | | | | | | |
| Graphite | | | | | | | | | 20.0 | | | | | | | |
| Copper powder | | | | | | | | | | 85.0 | | | | | | |
| Photoinitiator | | | | | | | 4.0 | | | | | | | 4.0 | | |
| Antifoaming agent, additives, etc. | 5.0 | 5.0 | 5.0 | 5.0 | 5.0 | 5.0 | 5.0 | 5.0 | 5.0 | 1.0 | 5.0 | 5.0 | 5.0 | 5.0 | 5.0 | 5.0 |
| Silica | 10.0 | 10.0 | 15.0 | | 5.C | 3.0 | 2.0 | 15.0 | | | 10.0 | 15.0 | 3.0 | | 20.0 | 2.0 |
| Talc | 20.0 | 10.0 | 10.0 | | | 10.0 | | 5.0 | 5.0 | | 20.0 | 10.0 | | | 10.0 | |
| <Total component weight ratio> | 100.1 | 100.0 | 100.0 | 100.0 | 100.0 | 100.0 | 100.0 | 100.0 | 100.0 | 100.0 | 100.0 | 108.0 | 100.0 | 100.0 | 100.0 | 101.0 |

| <Object printed> | Polyester film | Polyester film | Polycarbonate sheet | Glass | Acrylic board | Vinyl chloride film | Coated sheet | Acrylic board | Glass | Glass | Polyester film | Glass | Acrylic board | Coated sheet | Polycarbonate sheet | |
|---|---|---|---|---|---|---|---|---|---|---|---|---|---|---|---|---|
| <Physical property values> | | | | | | | | | | | | | | | | |
| Viscosity [Pa·s] | 100.0 | 75.0 | 30.0 | 180.0 | 80.0 | 110.0 | 50.0 | 60.0 | 130.0 | 180.0 | 120.0 | 90.0 | 10.0 | 30.0 | 50.0 | 6.0 |
| TI value [-] | 7.0 | 6.0 | 8.0 | 2.0 | 4.0 | 5.0 | 3.0 | 5.0 | 2.5 | 5.0 | 6.0 | 8.0 | 3.0 | 1.0 | 10.0 | 2.0 |
| Flow value [mm] | 15.5 | 17.0 | 18.0 | 14.0 | 16.0 | 15.0 | 18.0 | 16.5 | 15.0 | 14.0 | 16.0 | 15.0 | 19.0 | 19.0 | 15.0 | 21.0 |
| F60-F45 [mm] | 0.4 | 0.6 | 0.2 | 1.0 | 0.7 | 0.8 | 1.0 | 0.6 | 0.3 | 0.2 | 0.5 | 0.1 | 1.C | 1.2 | 0.1 | 1.5 |
| Mean particle size of particles in ink [µm] | 30.0 | 25.0 | 15.0 | 0.0 | 35.0 | 20.0 | 1.0 | 7.5 | 10.0 | 8.0 | 25.0 | 35.0 | 25.0 | 0.0 | 30.0 | 15.0 |
| Image edge spreading width [µm] | 5.0 | 6.0 | 4.0 | 10.0 | 6.0 | 9.0 | 10.0 | 7.0 | 8.0 | 4.0 | 6.0 | 2.0 | 20.0 | 25.0 | 0.0 | 30.0 |

| <Printed image evaluation> | | | | | | | | | | | | | | | | |
|---|---|---|---|---|---|---|---|---|---|---|---|---|---|---|---|---|
| Evaluation of high-quality, high-definition property of 100 µmϕ dot-printed image | G | VG | VG | G | G | VG | VG | VG | G | G | F | VG | F | P | G | P |
| Evaluation of high-quality, high-definition property of 100 µm lateral fine line-printed image | VG | VG | G | G | G | VG | G | VG | VG | VG | F | G | F | P | G | P |
| Evaluation of high-quality, high-definition property of 100 mm side-square solid pattern | VG | VG | G | G | VG | G | G | VG | G | G | G | P | G | VG | F | VG |

In table 1, VG, G, F, and P mean following state. :
VG: Very Good
Good: Good
F: Fair
P: Poor

For the ink compositions for screen printing of the examples and comparative examples, the materials listed in Table 1 were uniformly mixed by stirring using a propeller rotating stirrer, in the mixing ratios (wt%) listed in the same table, and then subjected to 2 passes of a triple roll mill disperser, and each produced ink composition was measured for viscosity, TI value, flow value (F60) and F60 - F45 value by the methods described above.

Next, the ink compositions for screen printing of the examples and comparative examples were screen printed onto the objects to be printed listed in Table 1 with a screen printing plate (emulsion thickness: 15 µm, flat-processed on emulsion surface), produced using an HS-D360 by Asada Mesh Co., Ltd. (mesh filament diameter: 25 µmϕ, calendered mesh thickness: 29 µm, open area ratio: 42%, strength index: 2.56 as indicated by Asada Mesh Co., Ltd.). The screen printing conditions were "a squeegee with an 80 degree hardness, a clearance of 5 mm, pressing with a squeegee printing pressure of 1.5 mm, a squeegee angle of 75 degrees, a squeegee speed of 100 mm/sec and pressing with a scraper pressure of 1.5 mm."

The screen printing plate was one having a printed image design comprising a 100 µmϕ dot pattern, a 100 µm longitudinal fine line pattern parallel to the printing direction, a lateral fine line pattern that was perpendicular to the printing direction and had a line width of 100 µm at 150 µm spacings, and a square solid pattern with 100 mm sides.

The width of spreading at the image edges after the ink compositions for screen printing of the examples and comparative examples were printed was measured by observing the printed coating film image sections printed with the lateral fine line pattern in the screen printing plate, having line widths of 100 µm at 150 µm spacings and perpendicular to the printing direction, with a length meter-mounted digital microscope at 200× magnification, measuring the spacings between the printed lateral fine lines, and calculating the difference from the printing plate design spacing of 150 µm. For example, when the spacings between the printed lateral fine lines were 140 µm, the difference from the printing plate design spacing of 150 µm was 10 µm, but since the image edges are on both sides of the lateral fine lines, the width of spreading at the image edges on one side is 5 µm, and this was therefore recorded as the "image edge spreading width."

Evaluation of the high-quality, high-definition property of the printed images was made as follows based on direct visual and 200× magnified observation with a digital microscope. The evaluation was conducted for 20th printed object.

### Evaluation of [High-quality, high-definition property of 100 µmϕ dot-printed image]

VG: Absolutely no defects such as chipping in 100 dot shapes.
G: Fine chipping, bleeding or shape distortion of 1 to 5 dots out of 100.
F: Chipping, bleeding or shape distortion of 6 to 30 dots out of 100.
P: Abnormalities in 31 or more dots out of 100.

### Evaluation of [High-quality, high-definition property of 100µm lateral fine line-printed image]

VG: Absolutely no defects such as spreading, distortion, bleeding or chipping.
G: Approximately 10 µm enlargement or thinning, but no loss due to bleeding or chipping.
F: 11 µm or greater enlargement or thinning.
P: Chipping of fine lines.

### Evaluation of [High-quality, high-definition property of 100 mm side-square solid pattern]

VG: Printed image with satisfactory leveling property and smoothness.
G: Slightly inferior leveling property but within allowable range for practical use.
F: Leveling property within allowable range for practical use, but printing abnormalities occurred.
P: Poor leveling property and unsuitable for practical use, with printing abnormalities also present.

When the ink composition of Example 1 was used for black matrix (lattice) printing with a line width of 200 µm and screen printing of black stripe lines with a 150 µm line width, high-definition screen printed matter was obtained with no defects such as bleeding or chipping and a single-side spreading width of 5 µm on the lines.

When the ink composition of Example 2 was used for resist pattern printing including a 100 um line width, high-definition screen printed matter was obtained with no defects such as bleeding or chipping and a pattern edge spreading width of 6 µm.

When the ink composition of Example 7 was used for spacer pattern printing with an 80 µm angle corner area and a 25 µm film thickness, high-definition screen printed matter was obtained with no defects such as bleeding or chipping and a pattern edge spreading width of 10 µm.

When the ink composition of Example 8 was used for printing of a light guiding panel dot group including a 100 µmϕ dot pattern, high-definition screen printed matter was obtained with no defects such as bleeding or chipping and a pattern edge spreading width of 7 µm.

As a result of measuring the volume resistance values of the coating films formed with the ink compositions of Example 9 and Example 10, they were 7.1 × 10⁻¹ Ω/cm and 3.4 × 10⁻¹ Ω/cm, respectively, confirming that the expected performance as a conductive coating film was successfully obtained.

## Claims

1. An ink composition for screen printing,
wherein the ink composition has a measured flow radius value of 14.0 to 19.0 mm after 1 minute from the start of measurement by a flow property measuring method using a spread meter at 25°C according to JIS K5701-1:2000, and wherein the ink composition satisfies "F60" - "F45" ≤ 1.0 mm, where "F60" is defined as the measured flow radius value after 1 minute and "F45" is defined as the measured flow radius value after 45 seconds from the start of measurement by a flow property measuring method using the spread meter,
the ink composition for high-quality/high-definition screen printing is one that, when producing printed matter by screen printing onto an object to be printed using a 360-mesh screen printing plate formed by a high-strength, non-deforming stainless steel mesh with a filament diameter of 25 µm, produces printed matter with a printed image edge spreading width of no more than 10 µm from the image design dimensions of the printing plate,
the ink composition for screen printing containing a solvent with a boiling point of 170°C or higher at 70 wt% or greater of the total solvent, and a prepolymer or polymer with a weight-average molecular weight of 2000 or greater at 2 wt% or greater with respect to the total ink composition, and
having a viscosity of 30 to 180 Pa·s as measured with a BH-type rotating viscosimeter at 25°C, and a thixotropic index (TI) of 2.0 to 8.0.

2. Printed matter produced by screen printing onto an object to be printed using the ink composition for screen printing according to Claim 1.

3. A method for producing printed matter, wherein the printed matter is produced by screen printing the ink composition according to Claim 1 onto an object to be printed.

## Patentansprüche

1. Tintenzusammensetzung für den Siebdruck,
wobei die Tintenzusammensetzung einen gemessenen Fließradiuswert von 14,0 bis 19,0 mm eine Minute nach Beginn der Messung nach einer Fließvermögenmessmethode unter Verwendung eines Streuungsmessgeräts bei 25°C nach JIS K5701-1:2000 aufweist, und wobei die Tintenzusammensetzung dem Wert "F60" - "F45" ≤ 1.0 entspricht, wobei "F60" definiert ist als der gemessene Fließradiuswert eine Minute und "F45" definiert ist als der gemessene Fließradiuswert 45 Sekunden nach Beginn der Messung nach einer Fließvermögenmessmethode unter Verwendung eines Streuungsmessgeräts,
die Tintenzusammensetzung für den Siebdruck von hoher Qualität und hohem Auflösungsvermögen eine Tintenzusammensetzung ist, die bei der Herstellung eines Druckerzeugnisses durch Siebdruck auf einen zu bedruckenden Gegenstand unter Verwendung einer 360-mesh-Siebdruckplatte, hergestellt aus einem hochfesten, nicht verformbaren Edelstahlgewebe mit einem Filamentdurchmesser von 25 µm, ein Druckerzeugnis mit einer Druckbildrandstreubreite von nicht mehr als 10 µm aus den Bildauslegungsdimensionen der Druckplatte,
die Tintenzusammensetzung für den Siebdruck ein Lösungsmittel mit einem Siedepunkt von 170°C oder höher bei 70 Gew.-% oder höher des Gesamtlösungsmittels und ein Prepolymer oder Polymer mit einer massegemittelten Molekularmasse von 2000 oder höher bei 2 Gew.-% oder höher, bezogen auf die Gesamttintenzusammensetzung, enthält, und
eine Viskosität von 30 bis 180 Pa·s, gemessen mit einem Rotationsviskosimeter vom BH-Typ bei 25°C, und einen Thixotropieindex (TI) von 2,0 bis 8,0 aufweist.

2. Druckerzeugnis, hergestellt durch Siebdruck auf einem zu bedruckenden Gegenstand unter Verwendung der Tintenzusammensetzung für den Siebdruck nach Anspruch 1.

3. Verfahren zur Herstellung eines Druckerzeugnisses, wobei das Druckerzeugnis hergestellt wird durch Siebdruck der Tintenzusammensetzung nach Anspruch 1 auf einen zu bedruckenden Gegenstand.

## Revendications

1. Composition d'encre pour sérigraphie,
dans laquelle la composition d'encre présente une valeur de rayon d'écoulement mesurée comprise entre 14,0 et 19,0 mm après une minute à partir du début de la mesure grâce à un procédé de mesure de propriété d'écoulement à l'aide d'un viscosimètre à 25°C selon JIS K5701-1:2000, et dans laquelle la composition d'encre satisfait la relation « F60 » - « F45 » ≤ 1,0 mm, où « F60 » est défini comme étant la valeur de rayon d'écoulement mesurée après une minute et « F45 » est défini comme étant la valeur de rayon d'écoulement mesurée après 45 secondes à partir du début de la mesure grâce à un procédé de mesure de propriété d'écoulement à l'aide du viscosimètre,
la composition d'encre pour sérigraphie haute qualité/haute définition est une composition d'encre qui, lors d'une production de matériau imprimé par sérigraphie sur un objet à imprimer à l'aide d'une plaque de sérigraphie à 360 fils par pouce formée d'une toile en acier inoxydable non déformable haute résistance présentant un diamètre de filament de 25 µm, produit un matériau imprimé avec une largeur d'étalement de bord d'image imprimée de pas plus de 10 µm par rapport aux dimensions d'image de la plaque d'impression,
la composition d'encre pour sérigraphie contenant un solvant avec un point d'ébullition supérieur ou égal à 170°C pour 70 % en poids ou plus de 70 % en poids du solvant total, et un prépolymère ou un polymère présentant un poids moléculaire moyen en poids supérieur ou égal à 2000 pour 2 % en poids ou plus de 2 % en poids de la composition d'encre totale, et
présentant une viscosité comprise entre 30 et 180 Pa-s, mesurée avec un viscosimètre rotatif de type BH à 25°C, et un indice de thixotropie (TI) compris entre 2,0 et 8,0.

2. Matériau imprimé produit par sérigraphie sur un objet à imprimer à l'aide de la composition d'encre pour sérigraphie selon la revendication 1.

3. Procédé de production de matériau imprimé, dans lequel le matériau imprimé est produit grâce à une étape consistant à appliquer par sérigraphie la composition d'encre selon la revendication 1 sur un objet à imprimer.
